# EUROPÄISCHE PATENTSCHRIFT

(11) **EP 3 329 106 B1**
(45) Veröffentlichungstag und Bekanntmachung des Hinweises auf die Patenterteilung: **29.05.2019**
(21) Anmeldenummer: 16728349.8
(22) Anmeldetag: 13.06.2016
(51) Int. Cl.: F01N 3/20, B01D 53/94

(54) **TANKVORRICHTUNG**
TANK DEVICE
DISPOSITIF DE RÉSERVOIR

(30) Priorität: 29.07.2015 DE 102015214401
(43) Veröffentlichungstag der Anmeldung: 06.06.2018
(73) Patentinhaber: Robert Bosch GmbH, 70442 Stuttgart (DE)
(72) Erfinder: DOEFFINGER, Andreas, 71229 Leonberg (DE); SCHNEIDER, Ralf, 70499 Stuttgart (DE); SCHREIBER, Ruben, 71640 Ludwigsburg (DE)
(86) Internationale Anmeldenummer: PCT/EP2016/063496
(87) Internationale Veröffentlichungsnummer: WO 2017/016736

(56) Entgegenhaltungen:
- DE-A1-102008 001 280
- DE-A1-102010 029 269
- DE-A1-102013 211 760

## Beschreibung

### Stand der Technik

Die Erfindung geht aus von einer Tankvorrichtung nach der Gattung des unabhängigen Anspruchs. Aus der DE 10 2013 217 927 ist es schon bekannt, neben einer in einem Vorratstank für ein Reduktionsmittel zur Abgasnachbehandlung eingebauten, eine Heizung aufweisenden Tankeinbaueinheit eine Zusatzheizung im Bereich des Vorratstanks vorzusehen. Diese Zusatzheizung besteht aber aus einer im Tankinnern angeordneten Drahtheizung. Diese ist über eine Zwischenplattform der Tankeinbaueinheit elektrisch kontaktiert.

Auch die DE 10 2006 046 900 beschreibt im Rahmen der Reduktion von Stickoxiden einer Verbrennungskraftmaschine die Verwendung eines Reduktionsmittelbehälters, der zwei Heizelemente enthält.

Aus der DE 20 2006 010 615 U ist es bekannt, einen Vorratstank für eine in einem Kraftfahrzeug beispielsweise zur Abgasnachbehandlung benötigte Flüssigkeit mit dem Kühlwasser der Brennkraftmaschine des Kraftfahrzeugs zu beheizen.

Die DE 10 2008 011 464 offenbart eine Integration einer Heizschicht in die Wandung eines Vorratstanks für ein Reduktionsmittel zur Abgasnachbehandlung.

Aus der DE 10 2008 015 599 ist es bekannt, eine Heizung in Form einer Mikrowellen-Strahlungsquelle außerhalb eines Flüssigkeitstanks anzuordnen, um die Flüssigkeit im Tank mittels elektromagnetischer Strahlung zu beheizen.

Aus der DE 10 2013 210 742 ist es bekannt, im Bereich des Bodens einer Tankvorrichtung für ein Reduktionsmittel zur Abgasnachbehandlung eine Heizmatte einzulegen.

Eine Tankvorrichtung nach dem Oberbegriff des Anspruchs 1 ist aus der Druckschrift DE 10 2013 211760 A1 bekannt.

Die Druckschrift DE 10 2008 001280 A1 zeigt eine Dosiervorrichtung mit einer Heizfolie als Heizvorrichtung.

### Offenbarung der Erfindung

Die erfindungsgemäße Tankvorrichtung mit den kennzeichnenden Merkmalen des unabhängigen Anspruchs hat demgegenüber den Vorteil, mittels des Zusammenwirkens von Heizeinrichtung und Zusatzheizung ein sicheres Aufheizen und nachhaltiges Flüssighalten von bis zu mehr als 90% etwaig gefrorenen Reduktionsmittels zu gewährleisten, wobei die Form und Größe der Zusatzheizung in einfacher Weise eisdruckfest an den fahrzeugspezifischen Erfordernissen hinsichtlich der Auftauleistung, der Tankform und/oder des vorhandenen Bauraums ausgerichtet werden kann.

Die Zusatzheizung ist in die Wandung des Vorratsbehälters der Tankvorrichtung eingeschweißt, weil dies eine raumsparende und mechanisch insbesondere gegenüber Eisdruck robuste Konstruktion darstellt.

Durch die in den abhängigen Ansprüchen aufgeführten Maßnahmen sind vorteilhafte Weiterbildungen und Verbesserungen der im unabhängigen Anspruch angegebenen Tankvorrichtung möglich.

Des Weiteren ist es insbesondere vorteilhaft, eine verspiegelte Fläche bzw. eine spiegelnde Schicht bzw. Beschichtung vorzusehen, welche den Energieaufwand beim Aufheizen durch Ausrichtung der Wärmestrahlung minimiert.

Weitere Vorteile ergeben sich durch die weiteren in den abhängigen Ansprüchen und in der Beschreibung genannten Merkmale.

### Kurze Beschreibung der Zeichnungen

Ausführungsbeispiele der Erfindung sind in der Zeichnung dargestellt und in der nachfolgenden Beschreibung näher erläutert.

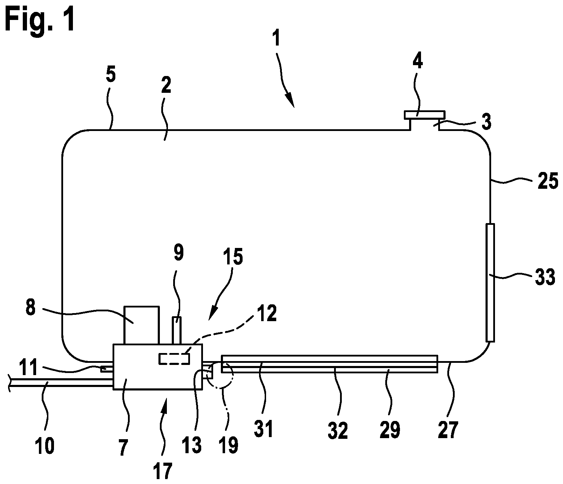

Es zeigt die
- Figur 1: eine Tankvorrichtung mit Tankeinbaueinheit und Zusatzheizung.

### Ausführungsformen der Erfindung

Figur 1 zeigt eine Tankvorrichtung 1 mit einem Vorratsbehälter 5 für ein Reduktionsmittel, beispielsweise eine wässrige Harnstofflösung, zur selektiven katalytischen Reduktion von Stickoxiden im Abgas einer insbesondere selbstzündenden Brennkraftmaschine eines Kraftfahrzeugs. Das Tankinnere 2 des Vorratsbehälters ist über eine in der Tankdecke angeordnete und mit einem Tankdeckel 4 verschließbare Befüllöffnung 3 mit dem Reduktionsmittel befüllbar. Eine Tankeinbaueinheit 7 ist im Bereich der Tankbodenwand 27 des Vorratsbehälters angeordnet und weist einen in das Tankinnere ragenden Bereich 15 und einen außerhalb des Tankinneren befindlichen Bereich 17 auf. Die Tankeinbaueinheit enthält eine Förderpumpe 8, mittels der das Reduktionsmittel bedarfsgerecht aus dem Tank herausgepumpt werden kann. Eine an die Tankeinbaueinheit angeschlossene Förderleitung 10 führt nachfolgend das Reduktionsmittel einer nicht näher dargestellten Dosiereinrichtung und anschließend dem Abgastrakt der Brennkraftmaschine zu. Die Tankeinbaueinheit enthält des Weiteren eine Heizeinrichtung 12 zum gegebenenfalls erforderlichen Flüssighalten bzw. zum Auftauen des Reduktionsmittels bei tiefen Außentemperaturen insbesondere im Bereich der in das Tankinnere ragenden bzw. dem Tankinneren zugewandten Komponenten der Tankeinbaueinheit. Eine weitere Komponente der Tankeinbaueinheit ist hierbei ein Füllstandssensor 9, der beispielsweise als Ultraschallsensor ausgeführt ist. Des Weiteren kann ein nicht näher dargestellter Qualitätssensor vorgesehen sein, der beispielsweise als kombinierter Füllstands- und Qualitätssensor ausgeführt ist. Neben der hydraulischen Verbindung mit der Förderleitung 10 außerhalb des Vorratsbehälters weist die Tankeinbaueinheit außerhalb des Vorratsbehälters eine elektrische Schnittstelle 11 auf zur Versorgung ihrer Komponenten mit elektrischer Energie bzw. zu deren elektrischer Ansteuerung und/oder zum Auslesen von Meßwerten beispielsweise zum Füllstand des Reduktionsmittels im Vorratsbehälter. Zusätzlich zur bereits in der Tankeinbaueinheit enthaltenen Heizeinrichtung 12 besitzt die Tankvorrichtung 1 eine Zusatzheizung, welche in einer Wand des Vorratsbehälters integriert ist. Die Zusatzheizung 29 befindet sich dabei in der Tankbodenwand 27 und weist eine Heizfolie bzw. Heizmatte 31 auf. Diese Heizfolie bzw. Heizmatte ist entweder beidseitig oder zumindest auf der dem Tankinnern zugewandten Seite vom Material der Tankwandung umgeben. Auf der vom Tankinnern abgewandten Seite ist eine verspiegelte Fläche 32 vorgesehen, welche Wärmestrahlung in das Tankinnere 2 reflektiert. Die elektrische Kontaktierung der Zusatzheizung 29 erfolgt über eine vorzugsweise außerhalb des Vorratsbehälters befindliche, im Bereich 17 der Tankeinbaueinheit angeordnete elektrische Anschlußstelle 13. Mit einem Kreis 19 ist hierbei schematisch die elektrische Verbindung zwischen der Anschlußstelle 13 und der Zusatzheizung 29 markiert. Sie kann über Drähte bzw. einen Stecker und/oder über ein Stanzgitter erfolgen. Die elektrische Schnittstelle zur Zusatzheizung kann die folgenden Signale bereitstellen: Spannungsversorgung des Zusatzheizers, Stromrücklesung, Vorhalt für Temperatursensoren / Thermosicherungen u.ä. Die Ausführungsform der Tankvorrichtung gemäß Figur 1 umfaßt eine weitere Zusatzheizung 33, welche nicht im Tankboden, sondern in einer Seitenwand 25 des Vorratsbehälters integriert ist. Deren elektrische Kontaktierung ist nicht näher dargestellt und kann entweder über die Zusatzheizung 29 oder auch direkt über die Tankeinbaueinheit erfolgen.

In einer abgewandelten Ausführungsform kann die Tankeinbaueinheit auch im Bereich einer Seitenwand oder im Bereich der Tankdecke angeordnet sein. Alternativ kann auch die weitere Zusatzheizung 33 im Bereich der Seitenwand weggelassen oder statt der Zusatzheizung 29 im Tankboden 27 nur die Seitenwand-Zusatzheizung 33 vorgesehen sein. Die elektrische Kontaktierung der jeweiligen Zusatzheizung kann alternativ auch getrennt von der Tankeinbaueinheit realisiert sein.

Die Ausführung der Zusatzheizung erfolgt möglichst großflächig und kann eigensicher durch Sollbruchstellen oder durch eine entsprechende temperaturabhängige Ansteuerung ausgestaltet werden. Die Befestigung der Zusatzheizung erfolgt beispielsweise über einen Einspritzvorgang im Tankboden oder in einer Seitenwand des Vorratsbehälters. Des Weiteren kann eine zusätzliche Isolation gegen äußere Temperatur- bzw. Wärmeeinflüsse vorgesehen sein, um Wärmeverluste zu minimieren. Der Zusatzheizer kann für flache Tankgeometrien am Tankboden, bei hohen Tankgeometrien auch oder nur an den Seitenwänden montiert werden. Um die Stabilität zu erhöhen, kann ein vorhandener Tank mit einem stabilisierenden weiteren Material umspritzt werden. Der Zusatzheizer ermöglicht es, eine hydraulische Verbindung des aufgetauten Mediums zur nicht näher dargestellten, im Bereich 15 der Tankeinbaueinheit befindlichen Ansaugstelle der Förderpumpe 8 dauerhaft herzustellen. Durch eine geeignete Form des Zusatzheizers in Kombination mit einer entsprechenden Form der Tankwandung kann eine Schwappschutzfunktion im Besonderen bei niedrigen Tankfüllständen erreicht werden.

Die Ansteuerung insbesondere der Zusatzheizung im Allgemeinen erfolgt beispielsweise mittels eines pulsweitenmodulierten Signals über ein zusätzliches Steuergerät mit softwaregebundener Heizstrategie oder mittels Integration der notwendigen Hard-/Software in bestehende Steuergeräte. Der Zusatzheizer wird dabei mittels On-Board-Diagnose-Funktionen überwacht und plausibilisiert. Zusätzliche Sensoren wie z.b. Temperatursensoren können zur Regelung/Steuerung herangezogen werden. Die Aktivierung kann parallel, sequentiell oder überlappend zu anderen Heizern wie der Heizeinreichtung 12, nicht näher dargestellten Druckleitungsheizungen o.ä. erfolgen.

Die Tankeinbaueinheit kann auch eine Zwischenplattform wie in DE 10 2013 217 927 beschrieben umfassen.

## Patentansprüche

1. Tankvorrichtung (1) eines Kraftfahrzeugs für ein Reduktionsmittel zur Nachbehandlung des Abgases des Kraftfahrzeugs, mit einem Vorratsbehälter (5) für das Reduktionsmittel und mit einer Tankeinbaueinheit (7) umfassend mindestens eine Förderpumpe (8) zum Herausfördern des Reduktionsmittels aus dem Vorratsbehälter (5) zu einer Einbringstelle in einen Abgastrakt des Kraftfahrzeugs, wobei die Tankeinbaueinheit (7) eine benachbart zur Förderpumpe (8) angeordnete Heizeinrichtung (12) aufweist, wobei mindestens eine in eine Wand (25, 27) des Vorratsbehälters (5) integrierte Zusatzheizung (29, 33) vorgesehen ist,
**dadurch gekennzeichnet, daß** die Zusatzheizung (29, 33) eine Heizfolie und/oder eine Heizmatte (31) aufweist, die in die Wand (25, 27) des Vorratsbehälters (5) eingeschweißt ist.

2. Tankvorrichtung nach Anspruch 1,
**dadurch gekennzeichnet, daß** die Zusatzheizung (29, 33) im Bereich eines Tankbodens (27) in der Wand integriert ist.

3. Tankvorrichtung nach Anspruch 1 oder 2,
**dadurch gekennzeichnet, daß** die Tankeinbaueinheit (7) im Bereich eines bzw. des Tankbodens (27) angeordnet ist.

4. Tankvorrichtung nach einem der vorhergehenden Ansprüche,
**dadurch gekennzeichnet, daß** die Zusatzheizung (29, 33) oder eine weitere Zusatzheizung (33) im Bereich einer Seitenwand (25) in der Wand integriert ist.

5. Tankvorrichtung nach einem der vorhergehenden Ansprüche,
**dadurch gekennzeichnet, daß** die Zusatzheizung (29, 33) eine verspiegelte Fläche (32) aufweist, wobei die verspiegelte Fläche auf der vom Tankinnern (2) abgewandten Seite der Zusatzheizung (29, 33) angeordnet und eingerichtet ist, Wärmestrahlung in das Tankinnere (2) hinein zu reflektieren.

6. Tankvorrichtung nach einem der vorhergehenden Ansprüche,
**dadurch gekennzeichnet, daß** die Tankeinbaueinheit (7) einen in das Tankinnere (2) ragenden Bereich (15) und einen außerhalb des Tankinnern (2) befindlichen Bereich (17) aufweist.

7. Tankvorrichtung nach Anspruch 6,
**dadurch gekennzeichnet, daß** die Zusatzheizung (29, 33) auf der dem Tankinnern (2) abgewandten Seite der Wand (25, 27) über die Tankeinbaueinheit (7) im außerhalb der Tankvorrichtung befindlichen Bereich (17) der Tankeinbaueinheit (7) elektrisch kontaktiert ist.

## Claims

1. Tank device (1) of a motor vehicle for a reducing agent serving for the aftertreatment of the exhaust gas of the motor vehicle, having a storage container (5) for the reducing agent, and having a tank installation unit (7) which comprises at least one delivery pump (8) for conveying the reducing agent out of the storage container (5) to a point of introduction into an exhaust tract of the motor vehicle, wherein the tank installation unit (7) has a heating device (12) which is arranged adjacent to the delivery pump (8), wherein at least one auxiliary heater (29, 33) which is integrated in a wall (25, 27) of the storage container (5) is provided, **characterized in that** the auxiliary heater (29, 33) has a heating foil and/or a heating mat (31) which is welded into the wall (25, 27) of the storage container (5).

2. Tank device according to Claim 1, **characterized in that** the auxiliary heater (29, 33) is integrated in the region of a tank base (27) in the wall.

3. Tank device according to Claim 1 or 2, **characterized in that** the tank installation unit (7) is arranged in the region of a or the tank base (27).

4. Tank device according to one of the preceding claims, **characterized in that** the auxiliary heater (29, 33) or a further auxiliary heater (33) is integrated in the region of a side wall (25) in the wall.

5. Tank device according to one of the preceding claims, **characterized in that** the auxiliary heater (29, 33) has a mirror-coated surface (32), wherein the mirror-coated surface is arranged on that side of the auxiliary heater (29, 33) facing away from the tank interior (2) and is configured to reflect heat radiation into the tank interior (2).

6. Tank device according to one of the preceding claims, **characterized in that** the tank installation unit (7) has a region (15) which projects into the tank interior (2) and a region (17) which is situated outside the tank interior (2).

7. Tank device according to Claim 6, **characterized in that** the auxiliary heater (29, 33) is electrically contacted on that side of the wall (25, 27) facing away from the tank interior (2) via the tank installation unit (7) **in that** region (17) of the tank installation unit (7) situated outside the tank device.

## Revendications

1. Dispositif formant réservoir (1) d'un véhicule automobile, le dispositif formant réservoir étant destiné à un agent réducteur de post-traitement des gaz d'échappement du véhicule automobile et comprenant un récipient de stockage (5) destiné à l'agent réducteur et une unité de réservoir incorporée (7) comprenant au moins une pompe d'alimentation (8) destinée à prélever l'agent réducteur dans le récipient de stockage (5) pour l'acheminer vers un point d'introduction dans un conduit de gaz d'échappement du véhicule automobile, l'unité de réservoir incorporée (7) comportant un moyen de chauffage (12) disposé de manière adjacente à la pompe d'alimentation (8), au moins un moyen de chauffage supplémentaire (29, 33) étant prévu qui est intégré dans une paroi (25, 27) du récipient de stockage (5),
**caractérisé en ce que** le dispositif de chauffage supplémentaire (29, 33) comprend un film chauffant et/ou un tapis chauffant (31) qui est soudé dans la paroi (25, 27) du récipient de stockage (5).

2. Dispositif formant réservoir selon la revendication 1,
**caractérisé en ce que** le moyen de chauffage supplémentaire (29, 33) est intégré dans la paroi dans la région d'un fond de réservoir (27).

3. Dispositif formant réservoir selon la revendication 1 ou 2,
**caractérisé en ce que** l'unité de réservoir incorporée (7) est disposée dans la région d'un ou du fond de réservoir (27).

4. Dispositif formant réservoir selon l'une des revendications précédentes,
**caractérisé en ce que** le moyen de chauffage supplémentaire (29, 33) ou un autre moyen de chauffage supplémentaire (33) est intégré dans la paroi dans la région d'une paroi latérale (25).

5. Dispositif formant réservoir selon l'une des revendications précédentes,
**caractérisé en ce que** le moyen de chauffage supplémentaire (29, 33) comporte une surface réfléchissante (32), la surface réfléchissante étant disposée du côté du moyen de chauffage supplémentaire (29, 33) qui est opposé à la partie intérieure (2) du réservoir et étant adapté pour réfléchir un rayonnement de chaleur jusque dans la partie intérieure (2) du réservoir.

6. Dispositif formant réservoir selon l'une des revendications précédentes, **caractérisé en ce que** l'unité de réservoir incorporée (7) comprend une région (15) saillant dans la partie intérieure (2) du réservoir et une région (17) se trouvant à l'extérieur de la partie intérieure (2) du réservoir.

7. Dispositif de réservoir selon la revendication 6, **caractérisé en ce que** le moyen de chauffage supplémentaire (29, 33) étant contacté électriquement du côté de la paroi (25, 27) qui est opposé à la partie intérieure (2) du réservoir par le biais de l'unité de réservoir incorporée (7) dans la région (17) de l'unité de réservoir incorporée (7) se trouvant à l'extérieur du dispositif formant réservoir.
